**Europäisches Patentamt**

**European Patent Office**

**Office européen des brevets**

(19)

(11) Veröffentlichungsnummer: **0 046 589**
**B1**

(12)

# EUROPÄISCHE PATENTSCHRIFT

(45) Veröffentlichungstag der Patentschrift:
16.07.86

(51) Int. Cl.⁴: **G 01 N 11/12**

(21) Anmeldenummer: **81106541.6**

(22) Anmeldetag: **22.08.81**

(54) **Vorrichtung zum Bestimmen der Viskosität einer Flüssigkeit.**

(30) Priorität: **23.08.80 DE 3031863**

(43) Veröffentlichungstag der Anmeldung:
**03.03.82 Patentblatt 82/9**

(45) Bekanntmachung des Hinweises auf die Patenterteilung:
**16.07.86 Patentblatt 86/29**

(84) Benannte Vertragsstaaten:
**AT BE CH FR GB IT LI LU NL SE**

(56) Entgegenhaltungen:
**GB - A - 863 510**
**GB - A - 1 356 920**
**US - A - 3 635 678**
**US - A - 4 027 516**

**MESURES-REGULATION-AUTOMATISME, vol. 42, no. 4, April 1977, Paris, FR "Un microviscosimètre amelloré et simplifié" Seiten 15-17**
**LE JOURNAL DE PHYSIQUE, PHYSIQUE APPLIQUEE, vol. 25, März 1964, Ergänzungsheft zu no. 3, Paris, FR R. BESSOUAT et al. "Dispositif de mesure de viscosites de liquides a haute température jusu'à 500 grad C et sous pression jusqu'à 20 kg/cm2", Seiten 23A-29A.**

(73) Patentinhaber: **Thöne, Ernst, Sorenkoppel 10 e,,**
**D-2000 Hamburg 73 (DE)**

(72) Erfinder: **Thöne, Ernst, Sorenkoppel 10 e,,**
**D-2000 Hamburg 73 (DE)**

(74) Vertreter: **Heldt, Gert, Dr. Dipl.-Ing., Neuer Wall 59 III,**
**D-2000 Hamburg 36 (DE)**

**Beschreibung**

Die Erfindung betrifft eine Vorrichtung zum Messen der Viskosität einer in einem Gefäss befindlichen Flüssigkeit durch Messen der Zeit, in der ein Normkörper eine durch zwei vertikale untereinander angeordnete Signalgeber vorgegebene Messstrecke durchläuft, mit Temperaturfühlern, die mit einer die Temperatur der Flüssigkeit konstant haltenden Regeleinrichtung verbunden sind.

Eine derartige Vorrichtung ist aus der Druckschrift LE JOURNAL DE PHYSIQUE; PHYSIQUE APPLIQUEE, 25 (1964) Ergänzungsheft zu No. 3, Paris, Seiten 23 A bis 29 A bekannt. Sie besitzt ein dickwandiges Gefäss aus Stahl, in dem sich die Flüssigkeit befindet und das von Heizspiralen umgeben ist. Temperaturfühler und Signalgeber sind in die Stahlwandungen der Röhre eingelassen. Eine Verwertung der Temperatur- und Zeitdaten in Verbindung mit dem spezifischen Gewicht der Flüssigkeit durch einen die Viskosität bestimmenden Rechner sind nicht vorgesehen.

Die Vorrichtung ist daher auch dann betriebsbereit, wenn die tatsächliche Temperatur der Flüssigkeit nicht mit der auf die Viskosität der Flüssigkeit bezogenen Temperatur übereinstimmt. Eine exakte Bestimmung der in hohem Masse sowohl von dem spezifischen Gewicht als auch von der Temperatur der Flüssigkeit abhängigen Viskosität ist daher nicht möglich. Die Vorrichtung ist ausserdem für einen bestimmten Laborplatz eingerichtet und schlecht zu transportieren. Eine schnelle Überprüfung der Viskosität einer Flüssigkeit an einem ausserhalb des Labors liegenden Ort ist nicht möglich. Auch ein Auswechseln der Flüssigkeit, deren Viskosität bestimmt werden soll, ist sehr umständlich, da ein unabhängig von den Messsonden auswechselbarer Topf zur Aufnahme der Flüssigkeit nicht vorgesehen ist. Die zu bestimmende Viskosität muss zudem erst durch zueinander in Beziehung zu setzende Daten ermittelt werden, die teilweise den Messgeräten der Vorrichtung und teilweise den Tabellen entnommen werden müssen.

Aus US-A-4 027 516 – Ochodnicky et al. – ist eine Vorrichtung bekannt, die nur innerhalb eines Messkreislaufes eingesetzt werden kann. Dieser Messkreislauf entnimmt einer Flüssigkeitsleitung Messproben. Diese Messprobe wird von der Flüssigkeitsleitung abgetrennt und durch das Messgerät solange umgepumpt, bis eine vorgegebene Temperatur erreicht ist. Nunmehr wird der Umlauf der Flüssigkeit stillgesetzt, und der Normkörper durchläuft die Messstrecke in dem Gefäss. Während dieser Durchlaufzeit finden innerhalb des Gefässes Temperaturveränderungen statt, die nicht berücksichtigt werden. Da die Viskositätsmessung in hohem Masse von Temperaturschwankungen abhängt, können mit Hilfe dieser Messanordnung vergleichbare Ergebnisse nicht erzielt werden. Insbesondere die doppelte Abhängigkeit der Viskosität einerseits und des spezifischen Gewichts andererseits von der Temperatur der zu messenden Flüssigkeit macht dieses Gerät ungeeignet, um zu genauen Viskositätsmesswerten zu gelangen. Die Messeinrichtung lässt keine Massnahme erkennen, mit deren Hilfe Temperaturänderungen verursachende Wärmeverluste verhindert werden können.

Aus US-A-3 635 678 – Lamont J. Seitz et al. – ist eine Vorrichtung bekannt, mit der die Gerinnungsgeschwindigkeit einer Flüssigkeitsprobe gemessen werden soll. Dabei wird eine Glasröhre mit der zu überprüfenden Flüssigkeit gefüllt. In die Flüssigkeit wird eine Metallkugel eingetaucht und mit Hilfe eines Magnetfeldes an einer bestimmten Stelle der Glasröhre festgehalten. Nunmehr wird die Glasröhre nach oben gedrückt. Bei einem bestimmten Gerinnungsgrad der Flüssigkeit wird der Druck der Flüssigkeit auf die Kugel grösser als die Kraft des Magnetfeldes und bewegt die Kugel aus dem Magnetfeld. Mit Hilfe einer Lichtschranke in Höhe des Magnetfeldes wird die Zeit bis zur Lösung der Kugel aus dem Magnetfeld gemessen. Sämtliche Einzelelemente des Messgerätes sind in einem Gehäuse angeordnet. Schalter, Kontrolllampe sowie Anzeigeeinrichtungen sind auf einer den Behälter nach obenhin abschliessenden Deckplatte montiert.

Aus der Druckschrift Mesures-Régulation-Automatisme 42 (1977) 4, Paris/FR; Seiten 15 bis 17 ist eine weitere Vorrichtung bekannt, deren Einzelelemente in einem Gehäuse zusammengefasst sind. Aus der GB-A-863 510 – Peter Duree – ist ausserdem eine Vorrichtung bekannt, deren Gefäss im Bereich seiner Mündung mit einer Berandung versehen ist, die einen Hohlraum des Behälters verschliesst.

Allen Entgegenhaltungen ist gemein, dass mit ihnen eine präzise Bestimmung der Viskosität einer Flüssigkeit nicht möglich ist. Sie sind nicht in der Lage, eine gleichmässige Erwärmung der Flüssigkeit und die Einhaltung der für die Ermittlung der Viskosität erforderlichen Temperatur auf einen vom spezifischen Gewicht der Flüssigkeit vorgegebenen Wert zu gewährleisten. Bei den bereits bekannten Geräten kann daher eine Aussage über die Viskosität bei vorangegangener Zeitmessung nur mit Hilfe von Tabellenmaterial gemacht werden, in dem die Zuordnung der gemessenen Zeit zur jeweiligen Viskosität unter Berücksichtigung des spezifischen Gewichts erfolgt. Die Fehlerquellen dieser Geräte liegen also darin, dass die Temperatur der zu messenden Flüssigkeit während der Zeitmessung nicht dem vorgegebenen Wert entsprechen muss und in den Tabellen eine fehlerhafte Zuordnung der Daten vorgenommen wird.

Aufgabe der vorliegenden Erfindung ist es daher, die Vorrichtung der einleitend genannten Art dahingehend zu verbessern, dass die Viskosität von Flüssigkeiten sehr genau auf schnelle Weise ermittelt werden kann.

Diese Aufgabe wird erfindungsgemäss dadurch gelöst, dass das Gefäss in einem Behälter angeordnet ist, der das Gefäss mit einem engen Hohlraum umschliesst, in dem die Temperaturfühler sowie ein Signalgeber – in Fallrichtung des Normkörpers gesehen – oben und der andere Signalgeber unten angeordnet sind, und der oben von einer Berandung des Gefässes verschlossen ist, dass die Regeleinrichtung über ein Steuerungsorgan mit den Signalgebern verbunden ist, deren Funktionsbereitschaft erst bei Erreichen der vorgegebenen Temperatur ausgelöst wird, dass die Signalgeber über das Steuerungsorgan auf eine die Zeit registrierende Einrichtung geschaltet sind, die mit einer Einstellung für das spezifische Gewicht der zu messenden Flüssigkeit versehen ist und mit einem Rechner zum Bestimmen der Viskosität aus der registrierten Zeit und den vorgegebenen Grössen verbunden ist, und dass die Regeleinrichtung mit einer Einstellung für die Temperatur versehen ist.

Diese Vorrichtung hat den Vorteil, dass sämtliche Einzelheiten zu einer Einheit zusammengefasst sind, die für eine genaue Viskositätswertbestimmung notwendig ist. Sofort nach Beendigung der Messung ist ein Viskositätswert verfügbar, ohne dass auf Bezugstabellen zurückgegriffen werden muss.

Dieses Messgerät trägt auch den Schwierigkeiten Rechnung, die bei der Messung der Viskosität insbesondere dadurch auftreten, dass sowohl das spezifische Gewicht als auch die Viskosität im hohen Masse von der Temperatur der zu messenden Flüssigkeit abhängen. Es erlaubt eine Viskositätsbestimmung bei einer exakt vorgegebenen Temperatur, auf die sich die Angabe des spezifischen Gewichts bezieht. Abweichungen von dieser Temperatur, die erhebliche Ungenauigkeiten in die Viskositätsbestimmungen bringen könnten, werden vermieden. Der Rechner bestimmt für diese vorgegebene Temperatur den Viskositätswert. Um Abweichungen von dieser Bezugstemperatur zu verhindern, enthält das Messgerät eine Verriegelung, die so beschaffen ist, dass das Messgerät zu einer Feststellung der Durchlaufzeit erst und nur dann kommt, wenn sich diese Bezugstemperaturen der Flüssigkeit eingestellt hat. Bei allen anderen Temperaturen muss die Aufnahme von Messwerten ausgeschlossen sein.

Die exakte Einhaltung der Bezugstemperatur wird mit Hilfe der indirekten Beheizung der Flüssigkeit ermöglicht. Die indirekte Heizung ist in einem Zwischenraum zwischen dem flüssigkeitsaufnehmenden Gefäss einerseits und einem Behälter andererseits vorgesehen, in den das Gefäss zum Zwecke des Erhitzens hineingesenkt wird.

Da der Temperaturunterschied zwischen diesem Zwischenraum und dem Innenraum des Gefässes unverändert immer gleich gross ist, können in diesem Zwischenraum auch der Temperaturfühler und der Signalgeber angeordnet werden, so dass die Wandungen des Gefässes zur Durchführung derartiger Messsonden nicht durchbrochen werden müssen. Die Vorrichtung ist in dieser Ausgestaltung leicht zu handhaben, einfach zu warten und ermöglicht es somit, dass die Viskositäts-Bestimmungen auch von ungeübten Kräften durchgeführt werden können.

Die Erfindung wird in den nachfolgenden ausführlichen Beschreibungen und den beigefügten Zeichnungen, in denen eine bevorzugte Ausführungsform der Erfindung beispielsweise veranschaulicht ist, näher erläutert.

In den Zeichnungen zeigen:

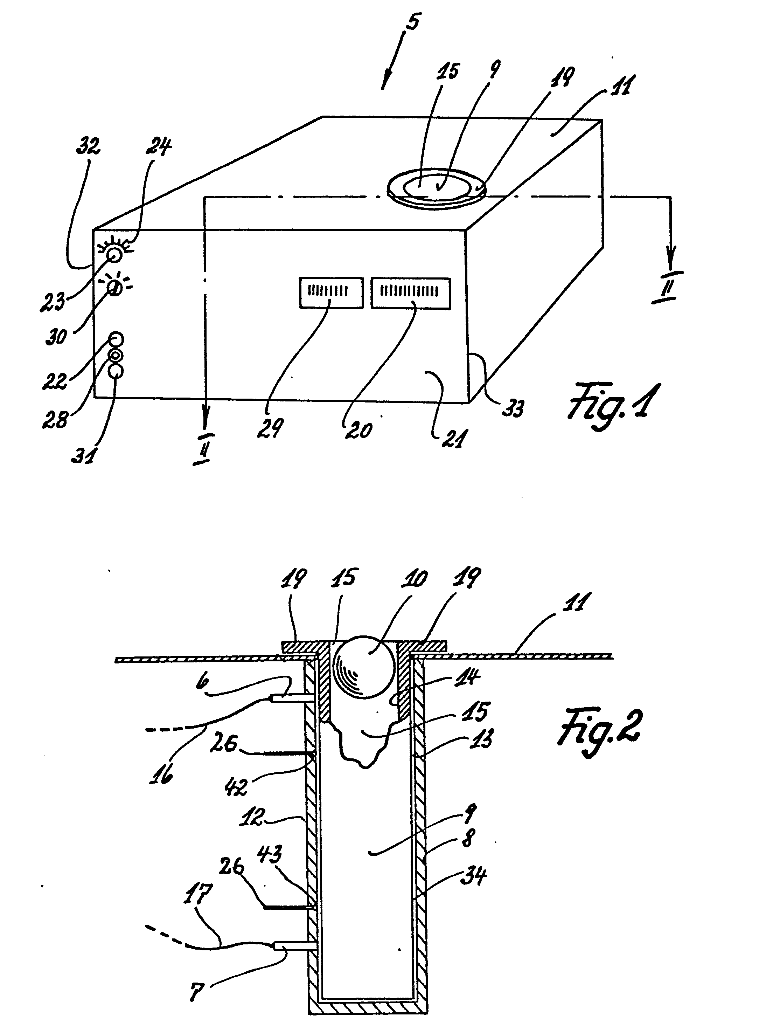

Fig. 1: eine perspektivische Darstellung einer Vorrichtung zur Messung der Viskosität,

Fig. 2: einen Querschnitt durch die Vorrichtung als Ausschnittsvergrösserung entlang der Schnittlinie I-I in Fig. 1 und

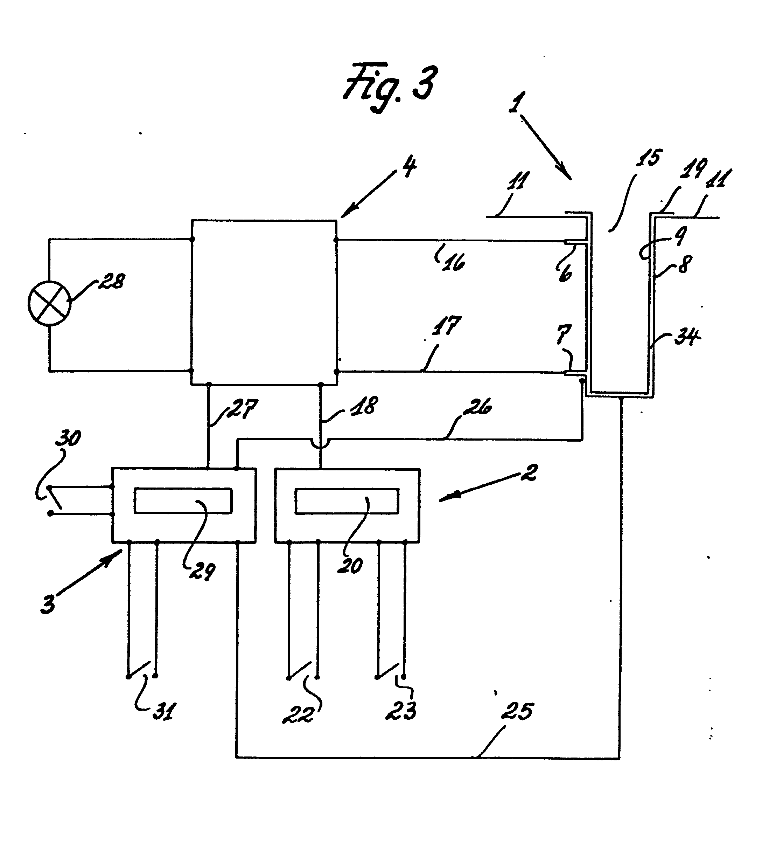

Fig. 3: eine schematische Darstellung einer Vorrichtung zur Ermittlung der Viskosität.

Die erfindungsgemässe Vorrichtung besteht im wesentlichen aus einer Messeinrichtung 1, einer registrierenden Einrichtung 2, einer temperaturregelnden Einrichtung 3 und einem Steuerungsorgan 4. Diese Teile sind innerhalb einer Box als Einheit zusammengefasst. Hierbei sind jeweils über das Steuerungsorgan 4 die Messeinrichtung 1 mit der temperaturregelnden Einrichtung 3 und die registrierende Einrichtung 2 mit der Messeinrichtung 1 funktionsauslösend gekoppelt.

Die Messeinrichtung 1 besteht aus zwei Signalgebern 6, 7, einem Behälter 8, in dem die Signalgeber 6, 7 befestigt sind, einem die Flüssigkeit aufnehmenden Gefäss 9, das aus einem die Signale der Signalgeber 6, 7 durchlassenden besonderen Material, beispielsweise V4A besteht und einer Normkugel 10. Der Behälter 8 ist mit der Box 5 fest verbunden und ragt durch eine Oberfläche 11 der Box 5 über seine gesamte Länge in den Behälter 8 hinein. Auf einer dem Innenraum der Box 5 zugewandten Seite 12 des Behälters 8 sind die Signalgeber 6, 7 befestigt. Sie sind lotrecht übereinanderliegend so angeordnet, dass durch die Signale des Signalgebers 7 ein Ende einer vorgegebenen Messstrecke innerhalb des Innenraums 13 des Behälters 8 markiert wird. Die Signalgeber 6, 7 geben ihre Signale in Richtung auf das im Innenraum 13 hängende Gefäss 9 ab. Das Material und die Dicke der Wandungen des Gefässes 9 sind so aufeinander abgestimmt, dass die Signale die Gefässwandungen 14 des Gefässes 9 durchdringen können. Auf diese Weise können die Signale in einen Innenraum 15 des Gefässes 9 eindringen und dort die Messstrecke markieren. Der Behälter 8 weist einen Innendurchmesser auf, der dem Aussendurchmesser des Gefässes 9 entspricht, so dass das in den Behälter 8 abgesenkte Gefäss 9 mit seiner Aussenwandung an der Innenwandung des Behälters 8 anliegt.

Der Signalgeber 6 ist über eine Steuerleitung 16 und der Signalgeber 7 über eine Steuerleitung 17 mit dem Steuerorgan verbunden. Von diesem führt eine Steuerleitung 18 zur registrierenden Einrichtung 2. Diese ist im wesentlichen als ein mit einem Rechner und einem Digitalanzeiger 20 gekoppelter Zeitmesser ausgebildet, der nach Auslösung durch einen Schaltimpuls des Signalgebers 6 anfängt, die nach seiner Auslösung verstreichende Zeit zu messen. Zweckmässigerweise ist der Zeitmesser als ein ein zeitabhängiges Signal erzeugendes Bauteil, beispielsweise ein Frequenzmodulator ausgebildet. Dieser gibt entsprechend der eingestellten Frequenz Signale ab, die von der registrierenden Einrichtung 2 gezählt werden. Diese Zählung wird durch einen Schaltimpuls des Signalgebers 7 beendet. Die Anzahl der in der Zwischenzeit registrierten Signale ist ein Mass für die verstrichene Zeit.

Die Messung erfolgt in der Weise, dass zunächst das Gefäss 9 mit Flüssigkeit gefüllt und in den Behälter 8 abgesenkt wird. Beim Einfüllen der Flüssigkeitsmenge ist dafür Sorge zu tragen, dass durch das Hineingleiten der Normkugel 10 in das Gefäss 9 keine Flüssigkeit über die Berandung 19 des Gefässes 9 tritt. Die Normkugel 10 durchfällt die Flüssigkeit und passiert dabei den Signalgeber 6. Dieser gibt dabei einen Schaltimpuls über die Steuerleitung 16 in Richtung auf das Steuerorgan 4 ab. Über die Steuerleitung 18 wird die registrierende Einrichtung 2 in Tätigkeit gesetzt, so dass sie die Zeit misst, die seit dem Durchlaufen der Signalmarkierung des Signalgebers 6 verstrichen ist. Sobald die Normkugel 10 die Signalmarkierung des Signalgebers 7 passiert, wird von dem Signalgeber 7 über die Steuerleitung 17 ein Impuls in Richtung Steuerungsorgan 4 abgegeben, das über die Steuerleitung 18 die registrierende Einrichtung 2 abschaltet.

Über den Rechner wird die zur Bestimmung der Viskosität notwendige Multiplikation der festgestellten Zeiteinheiten mit den vorher einprogrammierten abhängigen Grössen entsprechend einer die Viskosität in Abhängigkeit von der Fallzeit wiedergebenden Formel ausgeführt. Dadurch ist es möglich, von der registrierenden Einrichtung 2 unmittelbar den entsprechenden Viskositätswert anzeigen zu lassen. Zu diesem Zweck ist die registrierende Einrichtung 2 mit einem Digitalanzeiger 20 versehen, der auf einer Frontplatte 21, die auf der Seite 11 senkrecht steht, angebracht ist. Auf diesem Digitalanzeiger kann der entsprechende Viskositätswert sofort nach der Messung ohne zusätzliche Rechnung abgelesen werden. Vor Beginn einer neuen Messung wird durch Betätigung eines mit dem Digitalanzeiger 20 verbundenen Löschschalter 22 die Anzeige gelöscht und somit der Digitalanzeiger 20 für eine erneute Anzeige freigemacht. Hierbei kann der Digitalanzeiger 20 mit dem Rechner über den Löschschalter 22 so geschaltet sein, dass bei Löschung der Digitalanzeige das Ergebnis jeder einzelnen Messung im Rechner gespeichert und nach Beendigung von ohnehin notwendigen Wiederholungsmessungen ein arithmetischer Mittelwert der gespeicherten Ergebnisse berechnet und auf dem Digitalanzeiger 20 angezeigt wird.

Um mit der Vorrichtung auch Viskositätsmessungen bei Flüssigkeiten unterschiedlichen spezifischen Gewichts durchführen zu können, ist ein mit dem Rechner verbundener Schalter 23 vorgesehen, über den der Rechner der jeweiligen Flüssigkeit entsprechend umprogrammiert werden kann. Zweckmässigerweise ist der Schalter 23 als Wahlschalter mit einer ihn umgebenden Skala 24, auf der die unterschiedlichen spezifischen Gewichte eingraviert sind, ausgebildet. Aufgrund dieser Ausgestaltung als Wahlschalter kann der Rechner durch die entsprechende Stellung des Schalters 23 innerhalb der Skala 24 auf jedes gewünschte spezifische Gewicht umgestellt werden. Hierbei ist auch schaltungstechnisch die Möglichkeit vorgesehen, dass nach erfolgter Messung einer bestimmten Flüssigkeit anschliessend eine Flüssigkeit mit einem anderen spezifischen Gewicht gemessen wird.

Viskositätsmessungen müssen bei einer bestimmten Flüssigkeitstemperatur durchgeführt werden, um vergleichbare Ergebnisse zu erhalten. Zu diesem Zweck ist die temperaturregelnde Einrichtung 3 vorgesehen, mit der über den Behälter 8 die Flüssigkeit im Gefäss 9 aufgeheizt und während der Messung auf einer konstanten Temperatur gehalten wird.

Hierzu ist der Behälter 8 heizbar ausgebildet und steht über eine Heizleitung 25 und eine Steuerleitung 26 mit der temperaturregelnden Einrichtung in Verbindung. Diese ist mit einer Steuerleitung 27 über das Steuerorgan 4 funktionsauslösend mit den Signalgebern 6, 7 verbunden. Diese Funktionsauslösung wird über eine Kontrollampe 28, die ebenfalls mit dem Steuerungsorgan 4 verbunden ist, durch Aufleuchten angezeigt. Diese Kontrollampe 28 signalisiert, dass die Messstrecke zwischen den Signalgebern 6, 7 aktiviert und damit betriebsbereit ist. Darüber hinaus kann die temperaturregelnde Einrichtung 3 eine Digitalanzeige 29 aufweisen, die die Flüssigkeitstemperatur anzeigt. Zum Zwecke des Einstellens der Temperatur ist die temperaturregelnde Einrichtung 3 mit einem Temperaturwahlschalter 30 versehen, über den die gewünschte Flüssigkeitstemperatur eingestellt werden kann. Mit einem weiteren Schalter 31 wird die temperaturregelnde Einrichtung 3 und damit das gesamte Gerät eingeschaltet. Es ist aus Gründen der Übersicht und der leichten Bedienbarkeit vorgesehen, den Schalter 31, die Kontrollampe 28, den Temperaturwahlschalter 30, den Löschschalter 22, den Schalter 23 sowie die Digitalanzeige 29 zusammen auf der Frontplatte 21 anzuordnen. Die Schalter 23, 30, 22, 31 und die Kontrollampe 28 liegen entlang einer Kante 32 der Frontplatte 21 lotrecht untereinander. Im Bereich einer der Kante 32 gegenüberliegenden Kante 33 der Frontplatte 21 sind die Digitalanzeiger 20, 29 in horizontaler Richtung nebeneinander liegend angeordnet.

Eine Temperaturregelung erfolgt in der Weise, dass zunächst vor Beginn der Messung über den Schalter 30 die für die Messung der Viskosität einer bestimmten Flüssigkeit vorgeschriebene Temperatur eingestellt wird. Hiernach wird der Behälter 8 von einer Heizung beheizt, die mit der temperaturregelnden Einrichtung 3 über die Heizleitung 25 verbunden ist. Die sich einstellende Temperatur wird über Thermofühler 42, 43 innerhalb eines Hohlraumes 34 zwischen dem Behälter 8 und dem Gefäss 9 überprüft. Die Thermofühler 42, 43 geben ein Signal über die Steuerleitung 26 an die temperaturregelnde Einrichtung 3 ab. Ausserdem wird die jeweilige in dem Hohlraum herrschende Temperatur auf dem Digitalanzeiger 29 angezeigt. Ist die mit dem Schalter 30 vorgewählte Temperatur erreicht, werden über die Steuerleitung 27 und das Steuerorgan 4 die beiden Signalgeber 6, 7 in Betrieb genommen. Die Kontrolllampe 28 zeigt an, dass das Gerät betriebsbereit ist. Die sich zwischen den Signalgebern 6, 7 erstreckende Messstrecke ist aktiviert.

Für die Temperaturregelung ist die Ausgestaltung des geschlossenen Hohlraumes 34, der sich zwischen dem Behälter 8 und dem die Flüssigkeit enthaltenden Gefäss 9 erstreckt, vorteilhaft. Die vom Behälter 8 abströmende Wärme erwärmt die Luft, die das Gefäss 9 gleichmässig umströmt und somit die Flüssigkeit in dem Gefäss 9 gleichmässig aufwärmt. Innerhalb des Hohlraumes 34 sind die Temperaturfühler 42, 43 angebracht, so dass eine bestimmte Flüssigkeitstemperatur eingestellt, überwacht und während der Messung auf dem vorgeschriebenen Wert konstant gehalten werden kann. Die Berandung 11 schliesst den Hohlraum 34 nach oben hin ab, so dass die warme Luft aus ihm nicht entweichen kann.

Eine Viskositätsmessung kann dann in dem folgenden Ablauf durchgeführt werden:
Nach dem Hineinstellen des mit der Flüssigkeit gefüllten Gefässes 9 in den Behälter 8 wird an der Box 5 das entsprechende spezifische Gewicht der Flüssigkeit sowie die vorgesehene Temperatur eingestellt und das Gerät über den Schalter 31 eingeschaltet. Hiernach kann auf dem Digitalanzeiger 29 das Ansteigen der Temperatur in der Flüssigkeit verfolgt werden. Beim Erreichen der Temperatur leuchtet die Kontrollampe 28 auf, die auch gleichzeitig die Messbereitschaft des Gerätes anzeigt. In diesem Zustand kann der Normkörper 10 in die Flüssigkeit hineingeleitet werden. Nach erfolgter erster Messung, deren Ergebnis auf dem Digitalanzeiger 20 aufgezeigt wird, kann der Normkörper 10 beispielsweise durch einen Stabmagneten aus dem Gefäss 9 zur Wiederholungsmessung herausgeholt werden. Vor der Wiederholung der Messung wird durch Betätigung des Löschschalters 22 das Ergebnis auf der Digitalanzeige 20 gelöscht und diese für eine Wiederholungsanzeige freigemacht. Nach erfolgter Messung kann das Gefäss 9 aufgrund seiner Ausgestaltung leicht aus dem Behälter 8 herausgenommen und gesäubert werden.

In einer weiteren modifizierten Form ist eine Schaltung denkbar, bei der alle vorgeschriebenen Einstellgrössen vor der Messung durch eine einzige Einstellung automatisch einprogrammiert werden. Diese Zusammenfassung der Einzeleinstellungen vor der Messung zu einer Gesamteinstellung kann beispielsweise über einen Flüssigkeitswahlschalter zusammengefasst werden. Hierzu wird lediglich noch die Bezeichnung der zu messenden Flüssigkeit auf dem Wahlschalter eingestellt. Durch die entsprechende Stellung des Schalters auf beispielsweise eine bestimmte Ölsorte wird dann automatisch das der Flüssigkeit entsprechende spezifische Gewicht sowie seine Messtemperatur eingestellt. Hierbei ist es auch denkbar, die registrierende Einrichtung 2 in der Art auszugestalten, dass auf dem Digitalanzeiger 20 sofort der dieser Ölsorte entsprechende Soll-Wert erscheint, der dann mit den sich während der Messung einstellenden Ist-Werten verglichen werden kann. Auf diese Weise ergeben sich ohne weiteres die Abweichungen der Ist-Werte vom Soll-Wert.

## Patentansprüche

1. Vorrichtung zum Messen der Viskosität einer in einem Gefäss (9) befindlichen Flüssigkeit durch Messen der Zeit, in der ein Normkörper (10) eine durch zwei vertikal untereinander angeordnete Signalgeber (6, 7) vorgegebene Messstrecke durchläuft, mit Temperaturfühlern (42, 43), die mit einer die Temperatur der Flüssigkeit konstant haltenden Regeleinrichtung (3) verbunden sind, dadurch gekennzeichnet, dass das Gefäss (9) in einem Behälter (8) angeordnet ist, der das Gefäss (9) mit einem engen Hohlraum (34) umschliesst, in dem die Temperaturfühler (42, 43) sowie ein Signalgeber (6) – in Fallrichtung des Normkörpers (10) gesehen – oben und der andere Signalgeber (7) unten angeordnet sind, und der oben von einer Berandung (19) des Gefässes (9) verschlossen ist, dass die Regeleinrichtung (3) über ein Steuerungsorgan (4) mit den Signalgebern (6, 7) verbunden ist, deren Funktionsbereitschaft erst bei Erreichen der vorgegebenen Temperatur ausgelöst wird, dass die Signalgeber (6, 7) über das Steuerungsorgan (4) auf eine die Zeit registrierende Einrichtung (2) geschaltet sind, die mit einer Einstellung (23) für das spezifische Gewicht der zu messenden Flüssigkeit versehen ist und mit einem Rechner zum Bestimmen der Viskosität aus der registrierten Zeit und den vorgegebenen Grössen verbunden ist, und dass die Regeleinrichtung (3) mit einer Einstellung (30) für die Temperatur versehen ist.

2. Vorrichtung nach Anspruch 1, dadurch gekennzeichnet, dass der Behälter (8) mit einer Box (5) fest verbunden ist, in der die Regeleinrichtung (3) und die die Zeit registrierende Einrichtung (2) angeordnet sind.

3. Vorrichtung nach Anspruch 1 und 2, dadurch gekennzeichnet, dass der Behälter (8) sich über seine Länge innerhalb der Box (5) erstreckt und eine Mündung im Bereich einer Oberfläche (11) der Box (5) aufweist, die diese in ihrer Gebrauchslage nach oben begrenzt.

4. Vorrichtung nach Anspruch 1 bis 3, dadurch gekennzeichnet, dass die Signalgeber (6, 7) am Behälter (8) in Gebrauchslage der Box (5) lotrecht übereinander befestigt sind und die Signalgeber (6, 7) eine die Signale in Richtung auf den Behälter (8) abgebende Ausrichtung aufweisen.

5. Vorrichtung nach Anspruch 1 bis 4, dadurch gekennzeichnet, dass das Herstellungsmaterial und die Stärke einer Gefässwandung (14) des Gefässes (9) eine die Signale in einen Innenraum (15) des Gefässes (9) durchlassende Kombination aufweisen.

6. Vorrichtung nach Anspruch 1 bis 5, dadurch gekennzeichnet, dass die Signalgeber (6, 7) von einem Steuerorgan (4) koordiniert sind und mit der registrierenden Einrichtung (2) verbunden sind.

7. Vorrichtung nach Anspruch 1 bis 6, dadurch gekennzeichnet, dass die registrierende Einrichtung (2) aus einem ein zeitabhängiges Signal abgebenden Bauteil, einem Rechner und einem Digitalanzeiger (20) besteht, die untereinander gekoppelt sind.

8. Vorrichtung nach Anspruch 1 bis 7, dadurch gekennzeichnet, dass das ein zeitabhängiges Signal abgebende Bauteil während des Messstreckendurchlaufs des Normkörpers (10) Signale mit bestimmter Frequenz abgibt, dass der Rechner mit einem die Zeiteinheiten in Viskositätswerte umrechnenden Programm versehen ist und dass der Digitalanzeiger (20) eine die, die vom Rechner gelieferten Viskositätswerte registriert Anzeige aufweist.

9. Vorrichtung nach Anspruch 1 bis 8, dadurch gekennzeichnet, dass der Digitalanzeiger (20) mit einem die Anzeige für Wiederholungsmessungen frei machenden Löschschalter (22) verbunden ist.

10. Vorrichtung nach Anspruch 1 bis 9, dadurch gekennzeichnet, dass zwischen dem Digitalanzeiger (20), dem Rechner und dem Löschschalter (22) eine Kopplung vorgesehen ist, bei der bei Löschung der Anzeige im Digitalanzeiger (20) das jeweilige Ergebnis einer Messung im Rechner gespeichert und bei Beendigung der letzten Messung einer Messserie die gespeicherten Ergebnisse der Einzelmessungen zu einem arithmetischen Mittelwert umgerechnet und auf dem Digitalanzeiger (20) ablesbar sind.

11. Vorrichtung nach Anspruch 1 bis 10, dadurch gekennzeichnet, dass der Rechner mit einem Schalter (23) verbunden ist, über den die Grösse des spezifischen Gewichts wahlweise entsprechend der jeweils zu messenden Flüssigkeit in den Rechner einprogrammierbar ist.

12. Vorrichtung nach Anspruch 1 bis 11, dadurch gekennzeichnet, dass die temperaturregelnde Einrichtung (3) mit dem Steuerungsorgan (4) über eine den funktionsauslösenden Impuls übertragende Steuerleitung (27) in Verbindung steht.

13. Vorrichtung nach Anspruch 1 bis 12, dadurch gekennzeichnet, dass der Behälter (9) eine Heizung aufweist, die mit der temperaturregelnden Einrichtung (3) über eine Heizleitung (25) verbunden ist.

14. Vorrichtung nach Anspruch 1 bis 13, dadurch gekennzeichnet, dass im engen Hohlraum zwischen dem Behälter (8) und dem im Behälter (8) stehenden Gefäss (9) die Heizung angeordnet ist.

15. Vorrichtung nach Anspruch 1 bis 14, dadurch gekennzeichnet, dass der Behälter (8) eine die Warmluft nur in Richtung des Hohlraumes (34) leitende Ausgestaltung aufweist.

16. Vorrichtung nach Anspruch 1 bis 15, dadurch gekennzeichnet, dass die Temperaturfühler (42, 43) an dem Behälter (8) vorgesehen und auf den Innenraum (13) ausgerichtet sowie über eine Steuerleitung (26) mit der temperaturregelnden Einrichtung (3) verbunden sind.

17. Vorrichtung nach Anspruch 1 bis 16, dadurch gekennzeichnet, dass die von der Steuerleitung (26) übertragenden Informationen als digitale Temperaturanzeige auf einem Digitalanzeiger (29) der Einrichtung (3) ablesbar sind.

18. Vorrichtung nach Anspruch 1 bis 17, dadurch gekennzeichnet, dass die Einrichtung (3) einen Schalter (30) zur Auswahl der gewünschten Temperatur aufweist.

19. Vorrichtung nach Anspruch 1 bis 18, dadurch gekennzeichnet, dass eine die Funktion der Signalgeber (6, 7) anzeigende Kontrollampe (28) vorgesehen ist.

20. Vorrichtung nach Anspruch 1 bis 19, dadurch gekennzeichnet, dass ein die Heizung einschaltender Schalter vorgesehen ist.

21. Vorrichtung nach Anspruch 1 bis 20, dadurch gekennzeichnet, dass die Schalter (23, 30; 22, 31), die Kontrollampe (28) und die Digitalanzeige (29, 30) auf einer die Box (5) zum Betrachter abschliessenden Frontplatte (23) angeordnet sind.

**Claims**

1. Apparatus for measuring the viscosity of a liquid being in a tube (9) by measuring the time, which uses a standard object (10) for passing a distance provided by two measuring elements (6, 7), with sensors (42, 43) for measuring the temperature of the liquid, which are connected with a controlling system (3) keeping the temperature of the liquid constant, characterized in that the tube (9) is assembled within a vessel (8), which surrounds the tube (9) with a narrow cavity (34) in which there are assembled as well said sensors (42, 43) as one of said measuring elements (6) in the falling direction of the object (10) in the upper part and the other in the lower part and which is closed in its upper part of a collar (19) of said tube (9), that said controlling system (3) is connected with said measuring elements (6, 7) via a controlling device (4), that the measuring elements (6, 7) will be ready for function not earlier than the liquid has reached said temperature, that the measuring elements (6, 7) are connected with a time recording device (2) via said controlling device (4), and that the recording device (2) is provided with an adjusting device (23) for the specific weight of the liquid to be measured and that the recording device (2) is connected with a computor for calculating the viscosity from the registered time and the given values, and that the controlling system (3) is provided with an adjusting device (30) for the temperature.

2. Apparatus defined in claim 1 characterized in that the vessel (8) is firmly connected with a box (5), in which the controlling system (3) and the time recording device (2) are assembled.

3. Apparatus defined in claim 1 and 2, characterized in that the vesel (8) extends with all its length within the box (5) and is provided with an opening, which extends through a surface (11) of the box (5), which defines the box (5) on its upper part in its position for use.

4. Apparatus defined in claim 1 to 3, characterized in that the measuring elements (6, 7) are connected to the vessel (8) vertical one upon the other in the position for use of the vessel (8) and that the measuring elements (6, 7) have a direction for sending out signals towards the vessel (8).

5. Apparatus defined in claim 1 to 4, characterized in that the material and the thickness of the walls (14) of the tube (9) have a combination of quality which allows said signals to enter into the interior of the tube (9).

6. Apparatus defined in claim 1 to 5, characterized in that the measuring elements (6, 7) are coordinated by a control element (4) and are connected with the recording device (2).

7. Apparatus defined in claim 1 to 6, characterized in that the recording device (2) consists of device delivering a signal which is dependent of time, a computor and a digital indicator (20), which are connected with one another.

8. Apparatus defined in claim 1 to 7, characterized in that the device delivering time dependend signals delivers signals of a definite frequency during the object (10) falling along the distance between the measuring elements (6, 7) and that the computor is provided with a soft ware which transforms the measured time units into viscosity units, and that the digital indicator (20) indicates the viscosity units delivered by the computor.

9. Apparatus defined in claim 1 to 8, characterized in that the digital indicator (20) is provided with an erasing device (22) clearing the digital indicator (20) for repeating measurements.

10. Apparatus defined in claim 1 to 9, characterized in that there is a coupling between the digital indicator (20) the computor and the erasing device (22), with which the actual outcome of a measurement is stored up within in the computor if the indication of the digital indicator (20) is erased and that stored outcomes of the several measurements are summarized to an arithmetic average and are shown on the digital indicator (20) after the last measurement of measurement series came to its end.

11. Apparatus defined in claim 1 to 10, characterized in that the computor is connected with a switch (23), with which the actual specific weight of a liquid which is to be measured may be introduced to the computer.

12. Apparatus defined in claim 1 to 11, characterized in that the temperature controlling system (3) is connected to the controlling device (4) by a controlline (27) which transmits the impuls which starts the function.

13. Apparatus defined in claim 1 to 12, characterized in that the tube (9) is provided with a heater, which is connected with a temperature controlling system (3) by a heaterline (25).

14. Apparatus defined in claim 1 to 13, characterized in that the heater is assembled within the narrow cavity defined between the vessel (8) and the tube (9) resting within the vessel (8).

15. Apparatus defined in claim 1 to 14, characterized in that the vessel (8) has a special form directing the heated air stream in the direction of the cavity (34) only.

16. Apparatus defined in claim 1 to 15, characterized in that the temperature measuring sensors (42, 43) are provided at the vessel (8), directed the interior (13) and connected by a controlline (26) with a temperature controlling system (3).

17. Apparatus defined in claim 1 to 16, characterized in that the information transmitted by the controlline (26) are readable on a digital indicator (29) of the temperature controlling system (3) as a digital temperature indication.

18. Apparatus defined in claim 1 to 17, characterized in that the temperature controlling system (3) is provided with a switch (30) for choosing the wanted temperature.

19. Apparatus defined in claim 1 to 18, characterized in that there is a control lamp (28) showing the function of the measuring elements (6, 7).

20. Apparatus defined in claim 1 to 19, characterized in that there is a switch for switching the heater.

21. Apparatus defined in claim 1 to 20, characterized in that the switches (23, 30; 22, 31), the control lamp (28) and digital indicator (29, 30) are provided on a front plate (21) which shuts up the box (5) in direction to an observer.

**Revendications**

1. Dispositif pour mesurer la viscosité d'un liquide se trouvant dans un cylindre (9), en mesurant le temps, dans lequel un corps normalisé (10) parcourt une section mesurée prédéfinie, par deux transmetteurs de signaux (6, 7) disposés verticalement l'un au-dessous de l'autre, avec des palpeurs de température (42, 43) qui sont reliés à un dispositif régulateur (3) maintenant constante la température du liquide, caractérisé par le fait que le cylindre (9) est placé dans un récipient (8) qui renferme le cylindre (9) avec un espace vide étroit (34) dans lequel sont disposés les palpeurs de température (42, 43) ainsi qu'un transmetteur de signaux (6) – vu dans le sens de chute du corps normalisé (10) – en haut et l'autre transmetteur de signaux (7) en bas, et qui est obturé en haut par un rebord (19) du cylindre (9), que le dispositif régulateur (3) est connecté aux transmetteurs de signaux (6, 7) par l'intermédiaire d'un organe de commande (4) dont la réponse opératoire n'est déclenchée qu'au moment où la température prédéfinie est atteinte, que les transmetteurs de signaux (6, 7) qui sont connectés avec un dispositif enregistrant le temps (2), lequel est pourvu d'un réglage (23) pour le poids spécifique du liquide à mesurer et connecté à un ordinateur pour la détermination de la viscosité à partir du temps enregistré et des valeurs prédéfinies, et que le dispositif régulateur (3) est muni d'un réglage de température (30).

2. Dispositif selon la revendication 1, caractérisé par le fait que le récipient (8) est solidement assemblé avec un coffret (5) dans lequel le dispositif régulateur (3) et le dispositif enregistrant le temps (2) sont disposés.

3. Dispositif selon les revendications 1 et 2, caractérisé par le fait que le récipient (8) s'étend sur sa longueur à l'intérieur du coffret (5) et présente, dans le domaine de la surface (11) du coffret (5), une ouverture celui-ci limitant dans vers le haut sa position d'utilisation.

4. Dispositif selon les revendications de 1 à 3, caractérisé par le fait que les transmetteurs de signaux (6, 7) du récipient (8) sont fixés d'aplomb au-dessus l'un de l'autre dans la position d'utilisation du coffret et que les transmetteurs de signaux (6, 7) présentent un alignement donnant les signaux en direction du récipient (8).

5. Dispositif selon les revendications de 1 à 4, caractérisé par le fait que le matériel de fabrication et l'épaisseur de paroi (14) du cylindre (9) présentent une combinaison laissant passer les signaux à l'intérieur (15) du récipient (9).

6. Dispositif selon les revendications de 1 à 5, caractérisé par le fait que les transmetteurs de signaux (6, 7) sont coordonnés par un organe de commande (4) et connectés avec le dispositif enregistreur (2).

7. Dispositif selon les revendications de 1 à 6, caractérisé par le fait que le dispositif enregistreur (2) se compose d'un élément donnant un signal fonction du temps, d'un ordinateur et d'un indicateur numérique (20), étant interconnectés.

8. Dispositif selon les revendications de 1 à 7, caractérisé par le fait que l'élément composant donnant un signal fonction du temps pendant le parcours du corps normalisé (10) dans la section mesurée, donne des signaux ayant une fréquence déterminée, que l'ordinateur est doté d'un programme convertissant les unités de temps en valeurs de la viscosité, et que l'indicateur numérique (20) présente un affichage qui enregistre les valeurs de la viscosité fournies par l'ordinateur.

9. Dispositif selon les revendications de 1 à 8, caractérisé par le fait que l'indicateur numérique (20) est connecté à un interrupteur d'effacement (22) libérant l'affichage pour des mesures de répétition.

10. Dispositif selon les revendications de 1 à 9, caractérisé par le fait qu'entre l'indicateur numérique (20), l'ordinateur et l'interrupteur d'effacement (22) est prévu un couplage par lequel, lors d'un effacement de l'affichage de l'indicateur numérique (20), le résultat respectif d'une mesure mémorisé dans l'ordinateur et, lors de l'achèvement de la dernière d'une série de mesures, les résultats mémorisés des mesures individuelles sont convertis en une valeur arithmétique moyenne et sont lisibles sur l'indicateur numérique (20).

11. Dispositif selon les revendications de 1 à 10, caractérisé par le fait que l'ordinateur est connecté avec un commutateur (23) par l'intermédiaire duquel la valeur du poids spécifique est programmable à volonté dans l'ordinateur, selon le liquide à mesurer respectivement.

12. Dispositif selon les revendications de 1 à 11, caractérisé par le fait que le régulateur de température (3) communique avec l'organe de commande (4) par l'intermédiaire d'une ligne 30 pilote (27) transmettant l'impulsion de déclenchement opératoire.

13. Dispositif selon les revendications de 1 à 12, caractérisé par le fait que le récipient (9) (SIC) présente un chauffage qui est relié avec le régulateur de température (3) par l'intermédiaire d'un conducteur chauffant (25).

14. Dispositif selon les revendications de 1 à 13, caractérisé par le fait que le chauffage est disposé dans l'espace étroit entre le récipient (8) et le cylindre (9) se trouvant dans le récipient (8).

15. Dispositif selon les revendications de 1 à 14, caractérisé par le fait que le récipient (8) présente un façonnage conduisant l'air chaud seulement en direction de l'espace vide (34).

16. Dispositif selon les revendications de 1 à 15 caractérisé par le fait que les palpeurs de température (42, 43) sont prévus au récipient (8) et alignés dans l'intérieur (13), ainsi que reliés par une ligne pilote (26) au régulateur de température (3).

17. Dispositif selon les revendications de 1 à 16, caractérisé par le fait que les informations, transmises comme affichage numérique de température à un indicateur numérique (29) du dispositif (3), sont lisibles.

18. Dispositif selon les revendications de 1 à 17, caractérisé par le fait que le dispositif (3) présente un commutateur (30) pour la sélection de la température voulue.

19. Dispositif selon les revendications de 1 à 18, caractérisé par le fait qu'une lampe de contrôle (28) indiquant la fonction des transmetteurs de signaux (6, 7) est prévue.

20. Dispositif selon les revendications de 1 à 19, caractérisé par le fait qu'un contacteur est prévu pour la mise en circuit du chauffage.

21. Dispositif selon les revendications de 1 à 20, caractérisé par le fait que les commutateurs (23, 30; 22, 31), la lampe de contrôle (28) et l'affichage numérique (29, 30) sont disposés sur une platine frontale (23) (sic) séparant le coffret de l'observateur.

Fig.1

Fig.2

*Fig. 3*